# EUROPÄISCHE PATENTANMELDUNG

(11) **EP 0 919 412 A2**
(43) Veröffentlichungstag der Anmeldung: **02.06.1999**
(21) Anmeldenummer: 98119958.1
(22) Anmeldetag: 22.10.1998
(51) Int. Cl.: B60J 7/057, E05F 15/14

(54) **Verfahren zum Betrieb eines Schiebedachsystems und Schiebedachsystem**

(30) Priorität: 27.11.1997 DE 19752476
(71) Anmelder: ROBERT BOSCH GMBH, 70442 Stuttgart (DE)
(72) Erfinder: Lamm, Hubert, 77876 Kappelrodeck (DE); Voehringer, Klaus, 76316 Malsch (DE); Dreier, Friedrich-Wilhelm, 76547 Sinzheim (DE); Haderer, Guenter, 77815 Buehl (DE)

(57) **Zusammenfassung**

Die vorliegende Erfindung betrifft ein Verfahren zum Betrieb eines Schiebedachsystems (1) für ein Kraftfahrzeug mit einem Schiebedach (2), einem Schiebedachantrieb (3) mit einem Schiebedachmotor und einer Vorrichtung (4) zur Steuerung des Schiebedachantriebs (3) sowie mit einer Einrichtung (10) zur Notverstellung des Schiebedachs (2). Erfindungsgemäß ist vorgesehen, daß die Betätigung der Einrichtung (10) zur Notverstellung des Schiebedachs (2) detektiert und diese Information der Vorrichtung (4) zur Steuerung des Schiebedachantriebs (3) übermittelt wird. Die vorliegende Erfindung betrifft ferner ein derartiges Schiebedachsystem.

## Beschreibung

### Stand der Technik

Die vorliegende Erfindung betrifft ein Verfahren zum Betrieb eines Schiebedachsystems mit einem Schiebedach, einem Schiebedachantrieb mit einem Schiebedachmotor und einer Vorrichtung zur Steuerung des Schiebedachantriebs sowie mit einer Einrichtung zur Notverstellung des Schiebedachs.

Derartige Schiebedachsysteme sind bekannt. Moderne Schiebedächer sind mit einem Motor, z. B. einem Elektromotor ausgerüstet, so daß sie nicht mehr über eine Handkurbel, sondern z. B. durch Betätigen eines Schalters bedient werden können. Zur Erhöhung der Sicherheit im Betrieb ist ein Schiebedach im allgemeinen mit einer Einrichtung zur Notverstellung versehen, die z. B. vom Fahrer betätigt werden kann. Bei einer derartigen Notverstelleinrichtung kann es sich auch um eine konventionelle Handkurbel handeln. Nachteilig daran ist, daß das Schiebedachsystem die Betätigung der Notverstelleinrichtung nicht registriert. Dies kann deswegen gefährlich werden, weil sich durch Betätigen der Notverstelleinrichtung Bereichsverschiebungen in der Steuerung des Schiebedachsystems ergeben können. Dies betrifft insbesondere die Einstellung von Schließkraftbegrenzungssystemen. Das kann dazu führen, daß beim schließen des Schiebedachs die Gefahr

### besteht, daß man sich die Finger einklemmt. Vorteile der Erfindung

Das erfindungsgemäße Verfahren, bei dem die Betätigung der Einrichtung zur Notverstellung detektiert und diese Information der Vorrichtung zur Steuerung des Schiebedachantriebs übermittelt wird, hat demgegenüber den Vorteil, daß die Betätigung der Notverstelleinrichtung registriert wird. Die Steuerung kann darauf adäquat reagieren, sei es durch automatische Nachverstellung der eventuell verschobenen Bereiche, sei es durch eine Blockade des Schiebedachantriebs.

Das korrespondierende erfindungsgemäße Schiebedachsystem zeichnet sich dadurch aus, daß es eine Einrichtung zur Übermittlung von Informationen über den Betriebszustand des Schiebedachsystems an die Vorrichtung zur Steuerung aufweist.

Durch die in den Unteransprüchen genannten Maßnahmen sind vorteilhafte Weiterbildungen und Verbesserungen des im Anspruch 1 angegebenen Verfahrens bzw. des im Anspruch 7 angegebenen Schiebedachsystems möglich.

Eine vorteilhafte Weiterbildung sieht vor, daß nach Übermittlung der Informationen an die Vorrichtung das Schiebedachsystem nicht automatisch wieder einjustiert wird, sondern der Schiebedachantrieb von die Vorrichtung zur Steuerung nicht mehr angesteuert wird, insbesondere, daß das Schiebedach in Schließrichtung nicht mehr bewegt wird. In Weiterbildung dieser vorteilhaften Maßnahme kann vorgesehen sein, daß die Vorrichtung zur Steuerung erst nach Neueinstellung des Schiebedachsystems wieder in Betrieb genommen wird. So ist mit einem minimalen Aufwand die größtmögliche Sicherheit für den Benutzer gewährleistet und daß er insbesondere durch einen unsachgemäßen Eingriff in Unkenntnis des Betriebszustandes des Schiebedachsystems sich selbst oder andere gefährdet. Außerdem erkennt der Benutzer sofort, daß das Schiebedachsystem in irgendeiner Form verändert wurde und wieder neu justiert werden muß.

In besonders vorteilhafter Weise ist eine Anzeigeeinrichtung vorgesehen, mittels derer die Betätigung der Einrichtung zur Notverstellung bzw. die Aufforderung zur Neueinstellung des Schiebedachsystems angezeigt wird. Auf diese Weise wird der Benutzer ausdrücklich auf den Betriebszustand des Schiebedachsystems hingewiesen und kann adäquat reagieren.

Das erfindungsgemäße Schiebedachsystem ist vorzugsweise mit einem speichernden Schalter oder einem Schaltsignal ausgestattet, um die Information über die Betätigung der Notverstellung an die Steuerung zu übermitteln.

### Zeichnung

Im folgenden wird die Erfindung anhand eines Ausführungsbeispiels mit Bezug auf die Zeichnung näher erläutert. Die einzige Figur zeigt eine schematische Darstellung eines erfindungsgemäßen Schiebedachsystems.

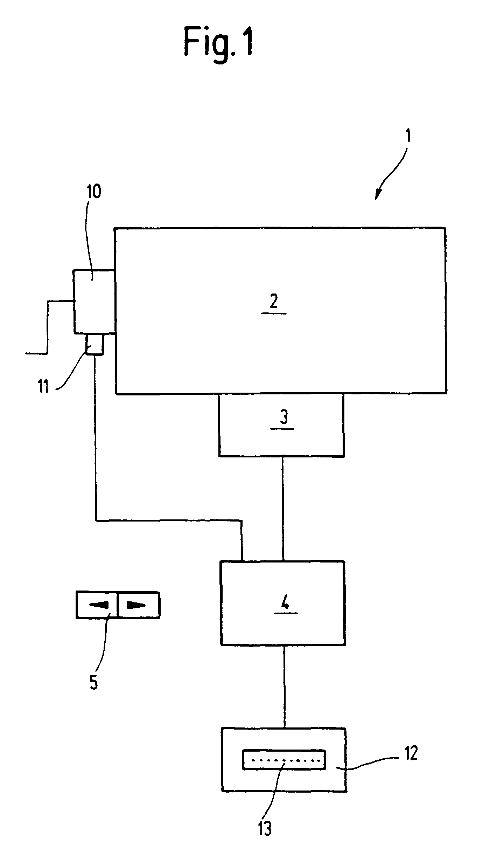

Das in Figur 1 schematisch dargestellte erfindungsgemäße Schiebedachsystem 1 umfaßt unter anderem ein Schiebedach 2, einen Schiebedachantrieb 3 mit einem Schiebedachmotor und eine Vorrichtung 4 zur Steuerung des Schiebedachantriebs 3. Ferner ist eine Betätigungseinrichtung in Form eines Schalters 5 vorgesehen, mit dem Steuersignale an die Vorrichtung 4 übermittelt werden können. Die Vorrichtung 4 steuert auf diese Signale hin den Antrieb 3 des Schiebedachs 2 an, so daß dieses geöffnet oder geschlossen wird.

Ferner ist eine Einrichtung zur Notverstellung des Schiebedachs 2 in Form einer Handkurbel 10 vorgesehen, mit der das Schiebedach 2 manuell geöffnet und verschlossen werden kann. Die Handkurbel 10 ist mit einer Einrichtung 11 ausgerüstet, mittels derer ein Signal an die Vorrichtung 4 übermittelt wird, sobald die Handkurbel 10 betätigt wird. Die Vorrichtung 4 blockiert in der Folge den Antrieb 3 derart, daß automatische Verstellungen des Schiebedachs 2 in Schließrichtung blockiert werden.

Gleichzeitig werden Informationen über ein geeignetes Übertragungsmittel, z. B. einen CAN-Bus, an eine Anzeigeeinrichtung 12 mit einem Display 13 übermittelt. Auf dem Display 13 erscheint eine Anzeige, die den Fahrer des Kraftfahrzeugs auffordert, das Schiebedachsystem 1 neu zu justieren.

Erfindungsgemäß ist also vorgesehen, daß ein Schaltsignal zur Verfügung gestellt wird, welches der Vorrichtung 4 mitteilt, daß eine Notverstellung durch eine Betätigung der Handkurbel 10 stattgefunden hat. Die Vorrichtung 4 reagiert darauf entsprechend derart, daß für den Benutzer bei der Betätigung des Schiebedachs 2 keine Gefahr von Verletzungen oder eine sonstige Gefahr besteht.

Statt einem entsprechenden Schaltsignal kann auch ein speichernder Schalter in die Einrichtung 11 bzw. die Vorrichtung 4 eingebaut sein, welcher ein entsprechendes Signal von der Handkurbel 10 zugeordneten Einrichtung 11 erhält.

## Patentansprüche

1. Verfahren zum Betrieb eines Schiebedachsystems (1) für ein Kraftfahrzeug mit einem Schiebedach (2), einem Schiebedachantrieb (3) mit einem Schiebedachmotor und einer Vorrichtung (4) zur Steuerung des Schiebedachantriebs (3) sowie mit einer Einrichtung (10) zur Notverstellung des Schiebedachs (2), dadurch gekennzeichnet, daß die Betätigung der Einrichtung (10) zur Notverstellung des Schiebedachs (2) detektiert und diese Information der Vorrichtung (4) zur Steuerung des Schiebedachantriebs (3) übermittelt wird.

2. Verfahren nach Anspruch 1, dadurch gekennzeichnet, daß die Information mittels eines speichernden Schalters oder eines Schaltsignals übermittelt wird.

3. Verfahren nach Anspruch 1 oder 2, dadurch gekennzeichnet, daß nach der Übermittlung der Informationen an die Vorrichtung (4) der Schiebedachantrieb von die Vorrichtung (4) nicht mehr angesteuert wird.

4. Verfahren nach Anspruch 3, dadurch gekennzeichnet, daß das Schiebedach (2) in Schließrichtung nicht mehr bewegt wird.

5. Verfahren nach Anspruch 3 oder 4, dadurch gekennzeichnet, daß die Vorrichtung (4) erst nach Neueinstellung des Schiebedachsystems (1) wieder in Betrieb genommen wird.

6. Verfahren nach einem der vorhergehenden Ansprüche, dadurch gekennzeichnet, daß die Betätigung der Einrichtung (10) zur Notverstellung bzw. die Aufforderung zur Neueinstellung des Schiebedachsystems (1) angezeigt wird.

7. Schiebedachsystem (1) mit einem Schiebedach (2), einem Schiebedachantrieb (3) mit einem Schiebedachmotor und einer Vorrichtung (4) zur Steuerung des Schiebedachantriebs (3) sowie mit einer Einrichtung (10) zur Notverstellung des Schiebedachs (2), dadurch gekennzeichnet, daß das Schiebedachsystem (1) eine Einrichtung (11) zur Übermittlung von Informationen über den Betriebszustand des Schiebedachsystems an die Vorrichtung (4) aufweist.

8. Schiebedachsystem nach Anspruch 7, dadurch gekennzeichnet, daß die Einrichtung (11) zur Übermittlung von Information ein speichernder Schalter oder ein Schaltsignal ist.

9. Schiebedachsystem nach Anspruch 7 oder 8, dadurch gekennzeichnet, daß eine Anzeigeeinrichtung (12) vorgesehen ist, die den Betriebszustand, insbesondere eine Betätigung der Einrichtung (10) zur Notverstellung des Schiebedachs (2) anzeigt.
